# EUROPEAN PATENT APPLICATION

(11) **EP 2 667 595 A2**
(43) Date of publication of application: **27.11.2013**
(21) Application number: 12736508.8
(22) Date of filing: 18.01.2012
(51) Int. Cl.: H04N 7/015

(54) **TRANSMISSION METHOD AND TRANSMISSION APPARATUS FOR A COMBINED BROADCASTING AND COMMUNICATION SERVICE**

(30) Priority: 18.01.2011 KR 20110005059
(71) Applicant: Samsung Electronics Co., Ltd, Gyeonggi-do 443-742 (KR); University of Seoul Industry Cooperation Foundation, Seoul 130-743 (KR)
(72) Inventor: RHYU, Sung-Ryeul, Yongin-si Gyeonggi-do 448-710 (KR); KIM, Yong-han, Seoul 130-743 (KR); HWANG, Seo-Young, Suwon-si Gyeonggi-do 442-835 (KR); SONG, Jae-Yeon, Seoul 135-795 (KR)
(74) Representative: Nederlandsch Octrooibureau
(86) International application number: PCT/KR2012/000448
(87) International publication number: WO 2012/099399

(57) **Abstract**

A reception method for a combined broadcasting and communication service includes receiving first metadata including second metadata, displaying the feasibility of reception of multimedia data replacing a broadcast program based on the first metadata including the second metadata, and receiving the multimedia data replacing the broadcast program through an Internet Protocol (IP) network based on the second metadata when the multimedia data replacing the broadcast program is determined, wherein the first metadata includes position information about the broadcast program, and the second metadata includes position information of the multimedia data replacing the broadcast program. Accordingly, a high-quality broadcast may be received.

## Description

### BACKGROUND OF THE INVENTION

### 1. Field of the Invention

The present invention relates generally to a combined broadcasting and communication service, and in particular, to a transmission method and apparatus for a combined broadcasting and communication service.

### 2. Description of the Related Art

Digital Multimedia Broadcasting (DMB) has been developed to satisfy the demands of users desiring to view video/audio broadcasts not only during walking but also at anytime and anywhere such as boarding in subway trains and vehicles. The DMB is broadly classified into Terrestrial-DMB (T-DMB) and Satellite-DMB.

In the T-DMB, since a video service is provided based on a European DAB system, a bit rate allocatable to one video program does not exceed 1.2 Mbps. In practice, one video program is broadcast at a bit rate of about 500 kbps. Therefore, the T-DMB provides a video service with a low resolution of a Quarter Common Intermediate Format (QCIF) grade (320*240 pixels).

Recently, since smart phones become capable of real-time TV video streaming, a demand for a high-resolution video service of a Standard Definition TV (SDTV) or High Definition TV (HDTV) grade also increases in the T-DMB. Thus, Advanced T-DMB (AT-DMB) increasing a transmission rate by 1.5 times (in mobile reception) to 2 times (in fixed reception) by introducing a hierarchical modulation scheme compatibly with the conventional T-DMB is being developed, and efforts are being made to provide a SDTV-grade video service compatibly with the conventional video service by using a Scalable Video Coding scheme of the H.264 standard.

However, even when the AT-DMB is commercialized, all of an available bit rate should be used at one time for an SDTV-grade video service. Therefore, for a T-DMB service provider that should provide several programs simultaneously, it is difficult to introduce such a service through a broadcast channel.

Also, in the case of a terrestrial HDTV service, a terrestrial TV modulation scheme with a high data rate of 50 Mbps to 100 Mbps is necessary for conversion to an Ultra HDTV (UHDTV) service in the future; however, this is the problem of a trade-off between a reception coverage and a transmission rate, and a system should be additionally installed to provide a reception coverage that is reduced due to a high transmission rate.

Meanwhile, Dynamic Adaptive Streaming over HTTP (DASH) is being developed, which is the standard technology for transmitting HTTP/TCP-based audio/video streaming instead of RTP/UDP-based audio/video streaming that is blocked by an Internet firewall.

Most smart phones have a wireless Internet communication function in addition to a DMB reception function. Therefore, regardless of mobile broadcasting such as T-DMB or fixed-reception broadcasting such as terrestrial HDTV, in a device including a receiver having a wired/wireless Internet communication function, it is more economical to solve the problem of an insufficient transmission rate by combination of broadcasting and communication.

Therefore, there is a need for a method and apparatus for providing a high-quality video/audio service without an investment burden for a broadcast network.

### SUMMARY OF THE INVENTION

Objects of the present invention are to substantially solve at least the above problems and/or disadvantages and to provide at least the advantages below. Accordingly, an object of the present invention is to provide a transmission method and apparatus for a combined broadcasting and communication service.

Another object of the present invention is to provide a method and apparatus for providing a combined broadcasting and communication service, which can provide a more improved picture quality by obtaining Media Presentation Description (MPD) defined in the DASH (Dynamic Adaptive Streaming over HTTP) standard through a broadcast channel or a communication channel on an as-needed basis in the case of a receiver having a wired/wireless Internet communication function in a broadcast system using the MPEG-2 TS standard.

According to a first aspect of the present invention, a reception method for a combined broadcasting and communication service includes: receiving first metadata including second metadata; displaying the feasibility of reception of multimedia data replacing a broadcast program based on the first metadata including the second metadata; and receiving the multimedia data replacing the broadcast program through an Internet Protocol (IP) network based on the second metadata when the multimedia data replacing the broadcast program is determined, wherein the first metadata includes position information about the broadcast program, and the second metadata includes position information of the multimedia data replacing the broadcast program.

According to a second aspect of the present invention, a reception apparatus for a combined broadcasting and communication service includes: a broadcasting communication module for receiving first metadata including second metadata; a control unit for displaying the feasibility of reception of multimedia data replacing a broadcast program based on the first metadata including the second metadata; and a transceiver for receiving the multimedia data replacing the broadcast program through an Internet Protocol (IP) network based on the second metadata when the multimedia data replacing the broadcast program is determined, wherein the first metadata includes position information about the broadcast program, and the second metadata includes position information of the multimedia data replacing the broadcast program.

According to a third aspect of the present invention, a transmission method for a combined broadcasting and communication service includes: adding second metadata including position information of multimedia data replacing a broadcast program into first metadata; and transmitting the first metadata including the second metadata through a broadcast channel, wherein the first metadata includes position information about the broadcast program or other broadcast programs.

According to a fourth aspect of the present invention, a transmission apparatus for a combined broadcasting and communication service includes: a program encoder for adding second metadata including position information of multimedia data replacing a broadcast program into first metadata; and a transmitter for transmitting the first metadata including the second metadata through a broadcast channel, wherein the first metadata includes position information about the broadcast program or other broadcast programs.

### BRIEF DESCRIPTION OF THE DRAWINGS

The above and other objects, features and advantages of the present invention will become more apparent from the following detailed description when taken in conjunction with the accompanying drawings in which:
FIG. 1 is a flow diagram illustrating a transmission method for a combined broadcasting and communication service according to an embodiment of the present invention;
FIG. 2 is a flow diagram illustrating a reception method for a combined broadcasting and communication service according to an embodiment of the present invention;
FIG. 3 is a diagram illustrating a time relation in broadcasting only by MPD according to an embodiment of the present invention;
FIG. 4 is a diagram illustrating a time relation in broadcasting by alternate media according to an embodiment of the present invention;
FIG. 5 is a diagram illustrating a time relation in broadcasting by alternate media components according to an embodiment of the present invention;
FIG. 6 is a diagram illustrating a broadcast transmitting apparatus for a combined broadcasting and communication service according to an embodiment of the present invention; and
FIG. 7 is a block diagram illustrating a broadcast receiving apparatus for a combined broadcasting and communication service according to an embodiment of the present invention.

### DETAILED DESCRIPTION OF THE PREFERRED EMBODIMENTS

Exemplary embodiments of the present invention will be described herein below with reference to the accompanying drawings. In the following description, detailed descriptions of well-known functions or configurations will be omitted since they would unnecessarily obscure the subject matters of the present invention. Also, the terms used herein are defined according to the functions of the present invention. Thus, the terms may vary depending on users' or operators' intentions or practices. Therefore, the terms used herein should be understood based on the descriptions made herein.

Hereinafter, a transmission method and apparatus for a combined broadcasting and communication service according to the present invention will be described.

Combined broadcasting and communication service scenarios are as follows.

The first is a combined broadcasting and communication video service scenario in mobile broadcasting. For example, if a user is viewing a drama by a smart phone through T-DMB and the display resolution of the smart phone is 640*480 or more, the user may be inconvenienced because images provided through the T-DMB are of low resolution and very low quality due to excessive compression. However, in the present invention, guidance indicating the feasibility of reception of the same drama in SDTV-grade high-quality video through broadcasting may be displayed (that is, the feasibility of an SDTV-grade high-quality video service based on DASH (Dynamic Adaptive Streaming over HTTP) transmitting audio/video streaming by using HTTP/TCP may be informed), and the user may select this according to the guidance, receive other multimedia data through Internet connection, and view the same content seamlessly in SDTV-grade high-quality video. The Internet connection is performed through a communication modem equipped in the smart phone, and the T-DMB reception is performed through a separate DMB receiver.

In another scenario, a broadcast is viewed seamlessly in a region incapable of receiving broadcast waves. For example, it is assumed that a user is viewing a drama by a smart phone through T-DMB and wants to enter a restaurant inside a large building and continuously view the drama while waiting for a promise partner, but T-DMB waves do not reach the inside of the restaurant. In the present invention, guidance indicating that the user may continuously view the same drama based on DASH transmitting audio/video streaming by using HTTP/TCP is displayed on a smart phone screen. The user may select this according to the guidance, receive other multimedia data through Internet connection, and view the same content seamlessly in SDTV-grade high-quality video.

The second is a combined broadcasting and communication video service scenario in fixed-reception TV broadcasting. That is, it is assumed that a user may view alternately in UHDTV (Ultra High Definition Television)-grade high-quality video and view a terrestrial HDTV drama by a purchased UHDTV but may also view a UHDTV broadcast program by subscribing to cable broadcasting or satellite broadcasting, and the user has not subscribed to cable broadcasting or satellite broadcasting. However, since the UHDTV is equipped with a modem connecting an ultrahigh-speed Internet, the user may use the Internet by the UHDTV In the present invention, when guidance indicating the feasibility of reception of the same drama in UHDTV-grade high-quality video through broadcasting is displayed (that is, when the feasibility of a UHDTV-grade high-quality video service based on DASH transmitting audio/video streaming by using HTTP/TCP is informed), the user may select this according to the guidance, receive other multimedia data through ultrahigh-speed Internet connection, and view the same content seamlessly in UHDTV-grade high-quality video.

The third is a media service scenario of broadcasting only DASH MPD (Media Presentation Description) through a broadcast channel. For example, it is assumed that a T-DMB service provider wants to open a new program channel, but a sufficient available transmission rate accommodating this does not exist in a currently-allocated T-DMB channel; however, the T-DMB service provider may open a new program channel by means of only several kbps by using the DASH protocol that has recently been standardized in the MPEG (Moving Picture Experts Group). Thus, the T-DMB service provider continuously broadcasts only DASH MPDs (or metadata) including only positions of file segments of program data to be provided through a T-DMB broadcast channel and information necessary to download this, and provides a database such that a video program may be viewed by downloading video program data through the Internet by a receiver capable of performing a DASH client function.

In order to implement the above scenarios, the following is required. First, position information about multimedia data corresponding to an alternate media program should be transmitted by being included in a broadcast stream. In addition, a program that was being viewed should be viewed seamlessly by an alternate video program. Also, a delay time until an actual program replacement time point should be minimized as far as possible.

In particular, in order to implement the third scenario, that is, a video service scenario of broadcasting only DASH MPD through a broadcast channel, DASH MPDs corresponding to the broadcast schedule time of the day should be broadcast before the corresponding program schedule time, and the receiver should be accurately informed of the start time of a program corresponding to each MPD.

The DASH MPD is used to provide a streaming service to the user by accessing a segment through a protocol designated in a defined resource schema. The DASH MPD includes four levels including media presentation, period, representation, and segment. Details of the DASH MPD will be referred to "Dynamic adaptive streaming over HTTP (DASH)" described in the ISO (International Organization for Standardization) document.

Meanwhile, in all digital broadcast standards such as terrestrial wave, satellite, cable, and DMB, an MPEG-2 TS (Transport Stream) is used to packetize and multiplex compressed media data. Thus, in the present invention, in order to satisfy the above requirements, by adding a media data descriptor into an MPEG-2 TS PMT (Program Map Table), media program data to be replaced is obtained by a DASH protocol by using the wired/wireless Internet.

The PMT includes information about programs, and each program has the PMT. Also, the PMT provides program_number and information about each program existing in the TS, and lists elementary streams constituting a described MPEG-2 program. The PMT provides not only an optional descriptor for each elementary stream but also position information for an optional descriptor describing the entire MPEG-2 program.

The MPEG-2 TS will be described below as an example; however, it will be apparent to those skilled in the art that the present invention may also be applicable to MMT (MPEG Media Transport).

Contents added into the MPEG-2 TS PMT are as follows.

### 1. Addition of Alternate Media Data Descriptor into Descriptor Loop for Entire Program

An alternate program data descriptor (hereinafter referred to as "alternate_media_data_descriptor") is added into a descriptor loop syntax into which a descriptor for the entire program inside the PMT may be inserted. This is information for replacing the entire program. In the alternate_media _data_descriptor, a DASH MPD of a program to be replaced and a PTS (Presentation Time Stamp) corresponding to the first RAP (Random Access Point) of the MPD are inserted. Herein, the PTS is a value based on the time base of this broadcast program.

Table 1 shows the syntax definition of alternate_media_data_descriptor.

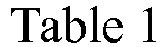

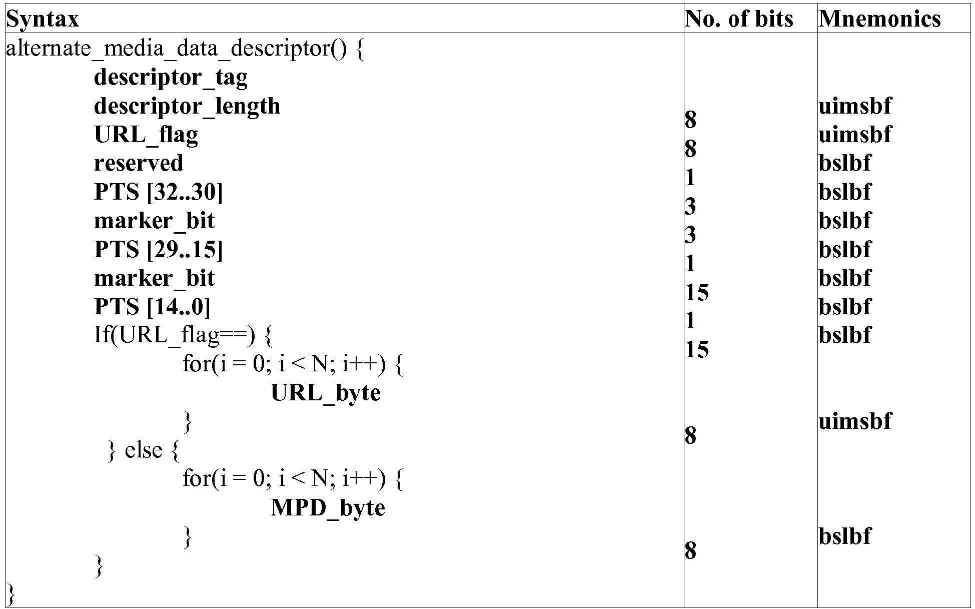

Herein, URL_flag is a value indicating whether to download an MPD from a URL (Uniform Resource Locator). When the MPD is included in the descriptor, the URL_flag is set to '0', and when the MPD is not included in the descriptor, the URL_flag is set to '1'. The URL for downloading the MPD is included in the descriptor. PTS is a value of the display start time of the first RAP of the MPD represented based on the time base of the corresponding program. The URL is site information for downloading the MPD, and the length of the URL is restricted to 249 bytes except a length of 7 bytes of other fields. The MPD is the compressed (gzip) data of an MPD for content replacing the corresponding program. Since the length of a descriptor is restricted to 256 bytes, an MPD compressed by gzip to 249 bytes except a length of 7 bytes of other fields may be included in the descriptor.

### 2. Addition of Alternate Media Component Data Descriptor into Descriptor Loop for Media Components

An alternate data descriptor (hereinafter referred to as "alternate_media_component_data_descriptor") for a media component is added into a descriptor loop syntax into which a descriptor for each media component inside the PMT may be inserted. That is, in the alternate_media_component_data_descriptor, as information for separately replacing data of the corresponding program component, a DASH MPD of a program to be replaced and a PTS (Presentation Time Stamp) corresponding to the first RAP (Random Access Point) of the MPD are inserted. Herein, the PTS is a value based on the time base of this broadcast program. When various media components are included in media data designated by the MPD, suitable media component data is found with reference to the stream-type of an Elementary Stream (ES) to be replaced.

Table 2 shows the syntax definition of alternate_media_component_data_descriptor.

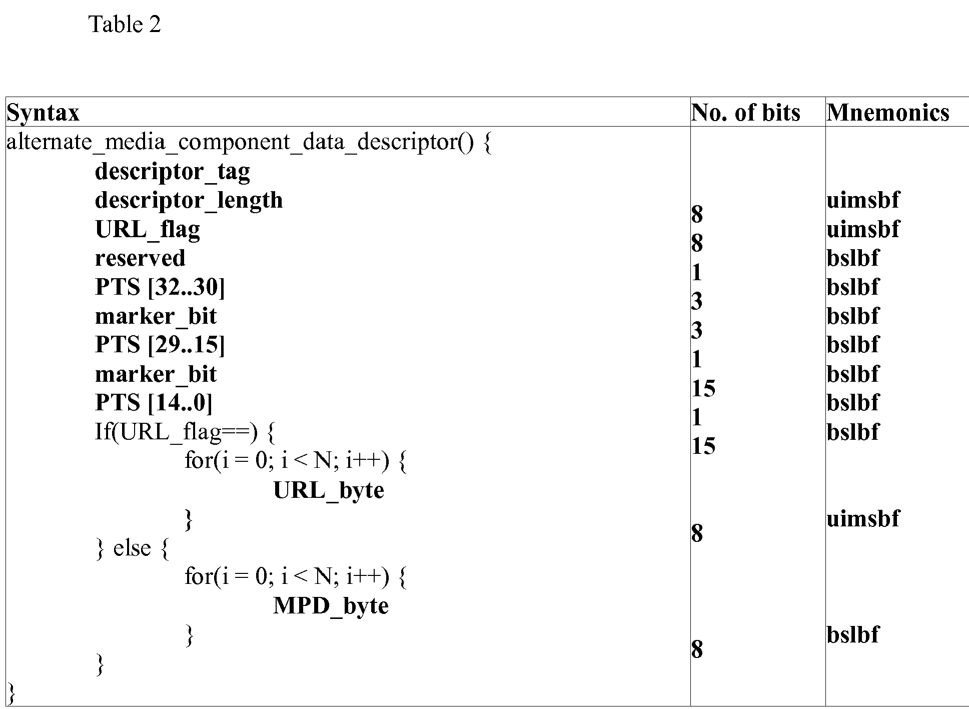

Herein, URL_flag is a value indicating whether to download an MPD from a URL (Uniform Resource Locator). When the MPD is included in the descriptor, the URL_flag is set to '0', and when the MPD is not included in the descriptor, the URL_flag is set to '1'. The URL for downloading the MPD is included in the descriptor. PTS is a value of the display start time of the first RAP of the MPD represented based on the time base of the corresponding program. The URL is site information for downloading the MPD, and the length of the URL is restricted to 249 bytes except a length of 7 bytes of other fields. The MPD is the compressed (gzip) data of an MPD for content including a media component replacing the ES of the corresponding program. Since the length of a descriptor is restricted to 256 bytes, an MPD compressed by gzip to 249 bytes except a length of 7 bytes of other fields may be included in the descriptor.

### 3. Addition of Media Data Descriptor for Broadcast Service by only DASH MPD transmission

Some events, that is, DASH MPDs corresponding to one program on schedule, are sequentially transmitted, so that a DASH client provides viewers with the content designated by the MPD in accordance with the schedule time.

To this end, for broadcasting, a DASH_MPD_descriptor is added into a descriptor loop for the entire program inside the PMT before the schedule time of the corresponding event. When the DASH_MPD_descriptor is included in the PMT, only information about an ES (Elementary Stream) carrying a PCR (Program Clock Reference is inserted into an information region for an ES of a separate media component. If a PCR_PID is set to use the time base of other programs inside the same TS, none may be inserted into the information region for the ES of the separate media component.

In the DASH_MPD_descriptor, a DASH MPD or an URL thereof and a PTS (Presentation Time Stamp) corresponding to the first RAP (Random Access Point) of the MPD are included. Herein, the PTS is a value based on the time base designated by the PCR_PID following the descriptor in the PMT.

Since the PMT is repeatedly transmitted at short periods of less than 0.7 second, the same MPD is repeatedly transmitted several times. When a new event schedule time arrives, other MPD starts to be broadcast from a predetermined time point. The receiver may know the change of the PTS through the change of the MPD. However, in order to simplify a process of checking the change/non-change of the PTS value every time while storing the previous PTS, a new_MPD_flag is additionally transmitted so that the receiver may easily know the change of the MPD.

Table 3 shows the syntax definition of DASH_MPD_descriptor.

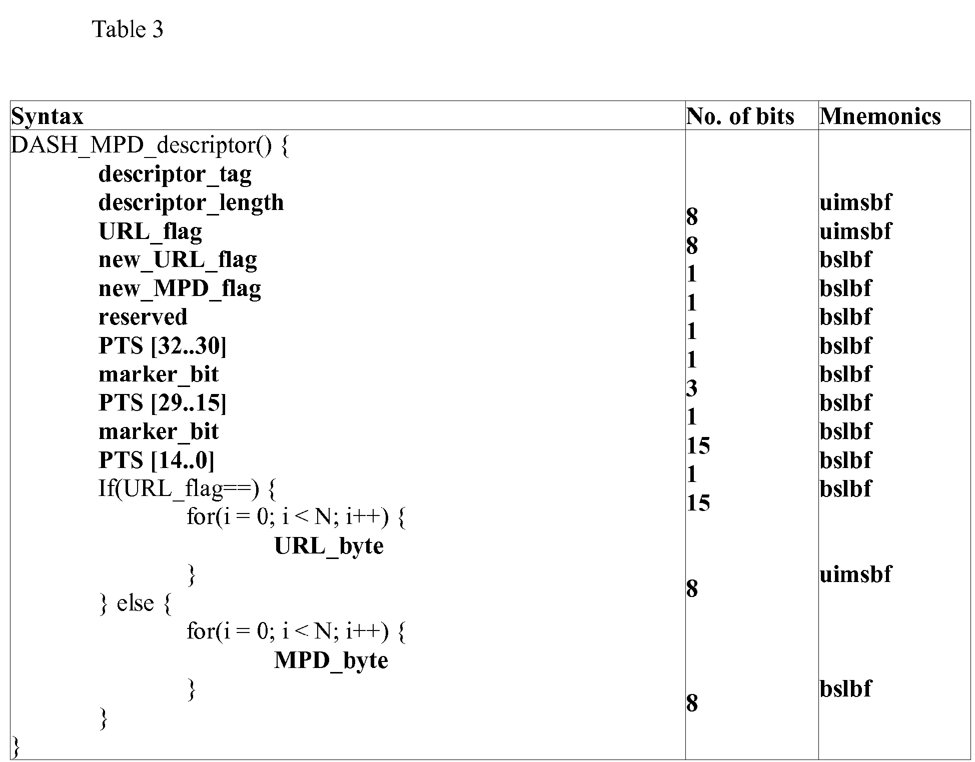

Herein, URL_flag is a value indicating whether to download an MPD from a URL (Uniform Resource Locator). When the MPD is included in the descriptor, the URL_flag is set to '0', and when the MPD is not included in the descriptor, the URL_flag is set to '1'. The URL for downloading the MPD is included in the descriptor. A new_URL_flag is meaningful only when a URL_flag is set to '1'; and it is set to '1' when the URL is corrected. A new_MPD_flag is set to '1' when the MPD or the PTS is corrected. PTS is a value of the display start time of the first RAP of the MPD represented based on the time base designated by the PCR_PID in the PMT. That is, the URL is site information for downloading the MPD, and the length of the URL is restricted to 249 bytes except a length of 7 bytes of other fields. The MPD is the compressed (gzip) data of an MPD for an event of the corresponding program. Since the length of a descriptor is restricted to 256 bytes, an MPD compressed by gzip to 249 bytes except a length of 7 bytes of other fields may be included in the descriptor.

Meanwhile, when a broadcast program by only DASH MPD transmission is to be provided, if the time base of other programs is not used, an ES for transmission of a PCR (Program Clock Reference) for timing synchronization should be included. If there is no ES to be transmitted, a dummy ES for transmission of only the PCR should be included in the TS. That is, when the PCR of other broadcast programs is not to be used, the broadcast program by only DASH MPD transmission should provide the PCR. To this end, the dummy ES is transmitted to provide the PCR. A TS packet including the dummy ES includes only "adaptation_filed", and the transmission period of the TS packet including the dummy ES is set to be less than 0.1 second. According to embodiments, the transmission period of the TS packet may be determined depending on service providers or multimedia data types.

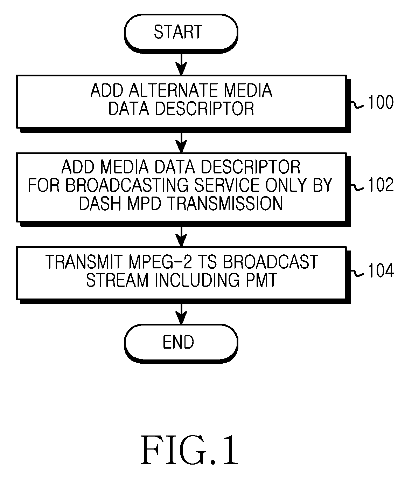

FIG. 1 is a flow diagram illustrating a transmission method for a combined broadcasting and communication service according to an embodiment of the present invention.

Referring to FIG. 1, in step 100, an alternate media data descriptor (alternate_media_data_descriptor described in Table 1 or alternate_media_component_data_descriptor described in Table 2) is added into a PMT.

The alternate_media _data_descriptor is added into a descriptor loop syntax for the entire program inside the PMT to provide MPD information about the entire program. That is, during the viewing of a broadcast program through a DMB receiver by a user, based on the DASH standard, the feasibility of provision of the same broadcast program being currently viewed by the user in high picture quality is informed.

The alternate_media_component_data_descriptor is added into a descriptor loop syntax for each media component inside the PMT to provide MPD information about one media component (e.g., one of video, audio, and data). That is, during the viewing of a broadcast program through the DMB receiver by the user, based on the DASH standard, the feasibility of provision of the component of the same broadcast program being currently viewed by the user in high picture quality is informed. The alternate_media_data_descriptor and the alternate_media_component_data_descriptor include a DASH MPD of a program or a program component and a PTS (Presentation Time Stamp) corresponding to the first RAP (Random Access Point) of the MPD. Herein, the PTS is a value based on the time base of the broadcast program.

Thereafter, in step 102, a broadcast receiving apparatus adds a media data descriptor (DASH_MPD_descriptor described in Table 3) for a broadcast service by only DASH MPD transmission (that is, a broadcast service that transmits only the MPD through a DMB broadcast channel and provides multimedia data (e.g., video, audio, and data) corresponding to the MPD through an Internet network) into the PMT. That is, the DASH_MPD_descriptor is a DASH MPD corresponding to one program, and the user views a broadcast by receiving only the DASH MPD through the DMB broadcast channel (that is, no program is transmitted through the DMB broadcast channel) and receiving the multimedia data corresponding to the DASH MPD, received through the broadcast channel, through the Internet.

Thereafter, in step 104, the broadcast receiving apparatus multiplexes the audio/video/data and the PMT including the alternate_media_data_descriptor, the alternate_media_component_data_descriptor, and the DASH_MPD_descriptor.

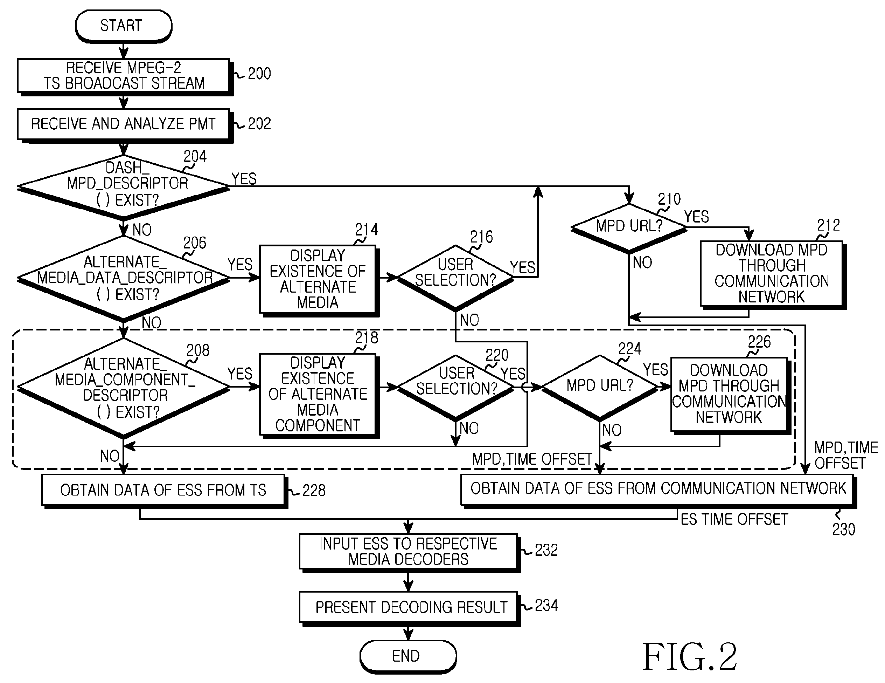

FIG. 2 is a flow diagram illustrating a reception method for a combined broadcasting and communication service according to an embodiment of the present invention.

Referring to FIG. 2, in step 200, a broadcast receiving apparatus (that is, a terminal such as a smart phone equipped with a DMB receiver and a communication modem providing an Internet connection function (hereinafter referred to as a DASH client) receives an MPEG-2 TS broadcast stream.

Thereafter, in step 202, the broadcast receiving apparatus periodically receives and analyzes a PMT corresponding to a user-selected program included in the MPEG-2 TS broadcast stream.

Thereafter, when a DASH_MPD_descriptor() is included among the descriptors for the entire program included in the PMT in step 204, the broadcast receiving apparatus determines that the program is a broadcast program by only a DASH MPD, and checks the existence/non-existence of a URL related to the MPD in step 210 (that is, checks a URL_flag value in Table 3). When URL_flag=0, since the MPD is included in the DASH_MPD_descriptor() and the MPD need not be downloaded through the URL, the broadcast receiving apparatus proceeds to step 230. On the other hand, when URL_flag=1, since the MPD need be downloaded through the URL, the broadcast receiving apparatus accesses the URL through a communication network in step 212 and proceeds to step 230. In other words, when the MPD is directly included in the DASH_MPD_descriptor(), the broadcast receiving apparatus provides the same to the DASH client; and when the URL of the MPD is provided, the broadcast receiving apparatus downloads the MPD through a communication network (e.g., a wired/wireless Internet such as wired Internet, WiFi, WiBro, or mobile communication network) and provides the same to the DASH client.

On the other hand, when the DASH_MPD_descriptor() is not included in step 204, the broadcast receiving apparatus proceeds to step 206 and checks whether an alternate_media_data_descriptor() is included among the descriptors for the entire program included in the PMT.

When the alternate_media_data_descriptor() is included in step 206, the broadcast receiving apparatus proceeds to step 214 and displays the existence of alternate media identical to the broadcast program.

Thereafter, when the alternate media identical to the broadcast program is selected by the user in step 216, the broadcast receiving apparatus performs steps 210 and 212 to obtain an MPD for the alternate media identical to the broadcast program. On the other hand, when the alternate media identical to the broadcast program is not selected by the user, the broadcast receiving apparatus proceeds to step 228.

That is, the broadcast receiving apparatus determines that the current program may be replaced with alternate content designated by the DASH MPD, and displays the existence of alternate content so that the user may select the alternate content on an as-needed basis. The alternate content is relatively-high-quality content with respect to the same content. Since the picture quality may change according to the conditions of a communication network, an indication corresponding to a high-quality possibility degree representing the alternate content that may be of potentially high quality is displayed only for a predetermined time, and this is recorded and stored in the broadcast receiving apparatus. Thereafter, the viewer may select the high-quality alternate content with reference to the displayed contents. In another embodiment, this may be checked and selected by a button command for checking the existence/non-existence of the alternate content. When the viewer selects the alternate content, the ESs included in the received MPEG-2 TS are discarded, data designated by the MPD is downloaded from the URL, and the data is continuously reproduced in the media ES obtained from a broadcast channel, for seamless broadcasting. When the MPD is directly included in the alternate_media_data_descriptor(), the MPD is input to the DASH client; and when the URL of the MPD is provided, the MPD is downloaded through the communication network and is provided to the DASH client.

On the other hand, when the alternate_media_data_descriptor() is not included in step 206, the broadcast receiving apparatus proceeds to step 208 and checks whether an alternate_media_component_data_descriptor() is included in a descriptor loop syntax into which a descriptor for each media component of the PMT may be inserted.

When the alternate_media_component_data_descriptor() is included in the descriptor loop syntax into which the descriptor for each media component of the PMT may be inserted, the broadcast receiving apparatus proceeds to step 218, determines that the media component may be replaced with the content designated by the DASH MPD, and display the existence of an alternate media component for a predetermined time so that the alternate media component may be selected.

Thereafter, when the alternate media component of the broadcast program is selected by the user in step 220, the broadcast receiving apparatus proceeds to step 224 and checks the existence/non-existence of a URL related to the MPD (that is, checks a URL_flag value in Table 2). When URL_flag=0, since the MPD is included in the alternate_media_component_data_descriptor() and the MPD need not be downloaded through the URL, the broadcast receiving apparatus proceeds to step 230. On the other hand, when URL_flag=1, since the MPD need be downloaded through the URL, the broadcast receiving apparatus accesses the URL through the communication network in step 226 and proceeds to step 230.

On the other hand, when the alternate media component of the broadcast program is not selected by the user in step 220, the broadcast receiving apparatus proceeds to step 228.

According to another embodiment, when the user does not want to display the existence of the alternate media component for a predetermined time in step 218, information about the existence of the alternate media component is stored and then displayed at the request of the viewer.

The alternate media component is a relatively or potentially-high-quality media component with respect to the same content. For example, when the media component is video, it is interpreted as high picture quality; and when the media component is audio, it is interpreted as high sound quality. Since the quality by the DASH depends on the network conditions, the quality may only be potentially high quality. Therefore, when the alternate media component is video, the contents of a high-picture-quality possibility degree may be displayed; and when the alternate media component is audio, the contents of a high-sound-quality possibility degree may be displayed, for selection by the viewer. The above process is performed on all media components included in the PMT. The following process is performed simultaneously on all of the selected alternate media components. When the viewer selects the alternate media component, the ES included in the received TS is discarded, and data designated by the MPD is downloaded and is seamlessly reproduced alternately. When the MPD is directly included in the alternate_media_component_data_descriptor(), the MPD is provided to the DASH client; and when the URL of the MPD is provided, the MPD is downloaded through the communication network and is input to the DASH client.

Thereafter, in step 228, the broadcast receiving apparatus obtains data of ESs from an MPEG-2 TS broadcast stream. That is, when the DASH_MPD_descriptor(), the alternate_media_component_data_descriptor(), and the alternate_media_data_descriptor() are not included in the PMT, or when the user does not want although at least one of the alternate_media_component_data_descriptor() and the alternate_media_data_descriptor() is included in the PMT, the broadcast receiving apparatus proceeds to step 228 and receives the broadcast program through the DMB receiver.

Meanwhile, in step 230, the broadcast receiving apparatus obtains data of ESs from the communication network. That is, when the DASH_MPD_descriptor() is included in the PMT, or when at least one of the alternate_media_component_data_descriptor() and the alternate_media_data_descriptor() is included in the PMT and is selected by the user, ESs are received from the communication network based on the MPD and a time offset.

Thereafter, the broadcast receiving apparatus inputs the ESs to the respective media decoders in step 232, and displays the broadcast program based on the decoding result in step 234.

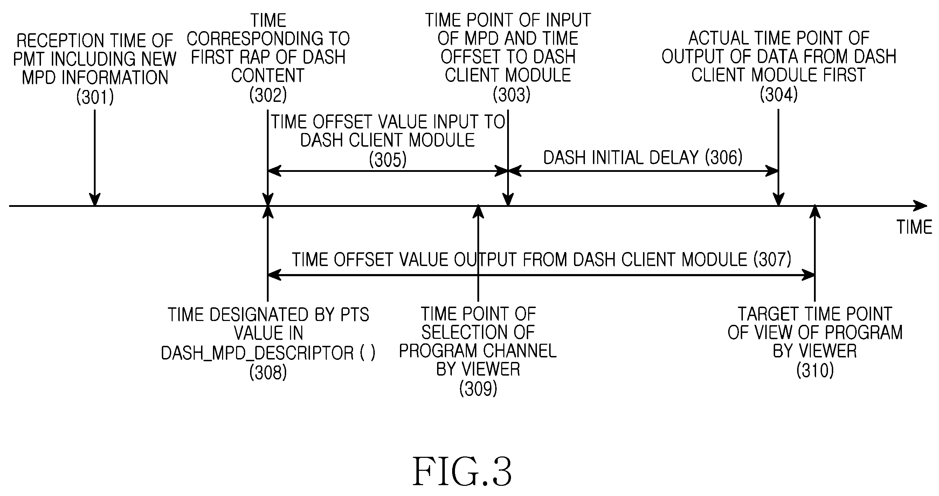

FIG. 3 is a diagram illustrating a time relation in broadcasting only by MPD according to an embodiment of the present invention.

FIG. 3 illustrates a time flow diagram from a time point 301 at which the broadcast receiving apparatus receives the PMT including the DASH_MPD_descriptor() to a time point 310 at which the viewer views the broadcast program based on the DASH_MPD_descriptor().

First, the broadcast receiving apparatus determines a value of a time offset 305 based on the DASH_MPD_descriptor() and provides the same to the DASH client. The time offset corresponds to the time interval from a time point 302 corresponding to the first RAP of the DASH content to a time point 303 at which the MPD and the time offset are provided to the DASH client. Herein, the DASH client receives the MPD and the time offset, fetches DASH segments corresponding to the RAP after the time point, which is obtained by adding the received time offset value 305 and a DASH initial delay time 306 to the time value 302 corresponding to the first RAP, through the communication network, extracts media component ESs, and transmits the same to each media decoder. The DASH client measures the DASH initial delay time 306, and sets the first-downloaded RAP data to be reproduced after the download time point. The DASH client outputs data of media ESs together with the time offset value from the time point 302 corresponding to the first RAP of the DASH content, that is, the time value designated by the PTS value inside the DASH_MPD_descriptor(), to the target time point 210 at which the viewer starts to view the program (that is, the reproduction time point of the first RAP output from the DASH client module). The broadcast receiving apparatus reproduces the decoding results of the media ESs from the time point obtained by adding the time offset 305 to the time point 308 designated by the PTS of the DASH_MPD_descriptor().

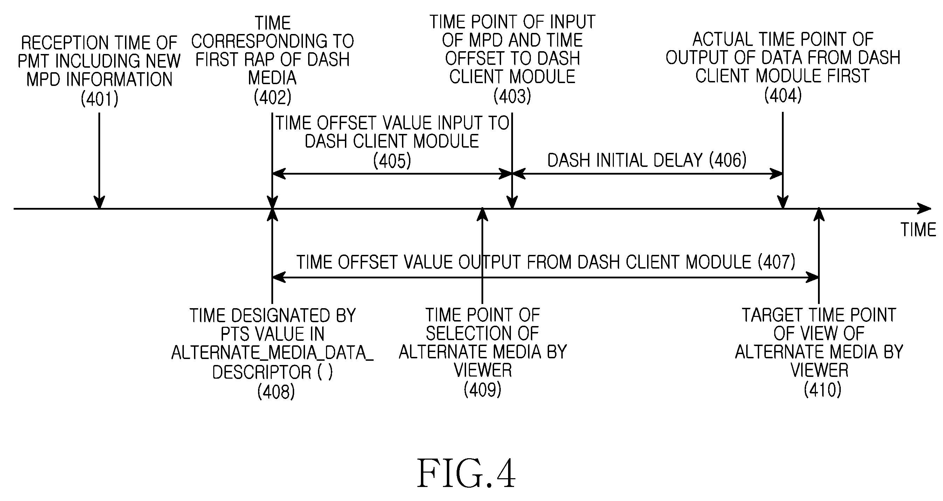

FIG. 4 is a diagram illustrating a time relation in broadcasting by alternate media according to an embodiment of the present invention.

Referring to FIG. 4, a value of a time offset 405 is also provided to the DASH client. The subsequent operations are very similar to those in the broadcasting by only the MPD (broadcasting by the DASH_MPD_descriptor()).

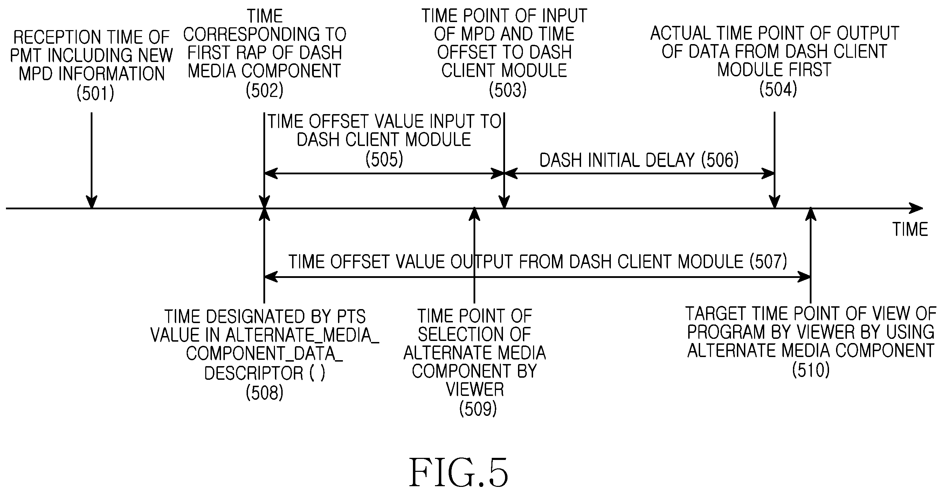

FIG. 5 is a diagram illustrating a time relation in broadcasting by alternate media components according to an embodiment of the present invention.

Referring to FIG. 5, a value of a time offset 505 is also provided to the DASH client. The subsequent operations are very similar to those in the broadcasting by only the MPD (broadcasting by the DASH_MPD_descriptor()). However, the broadcast receiving apparatus reproduces the decoding result of the media component ES from the time point obtained by adding the time offset received from the DASH client to the time point designated by the PTS inside the alternate_media_component_data_descriptor() corresponding to each media component.

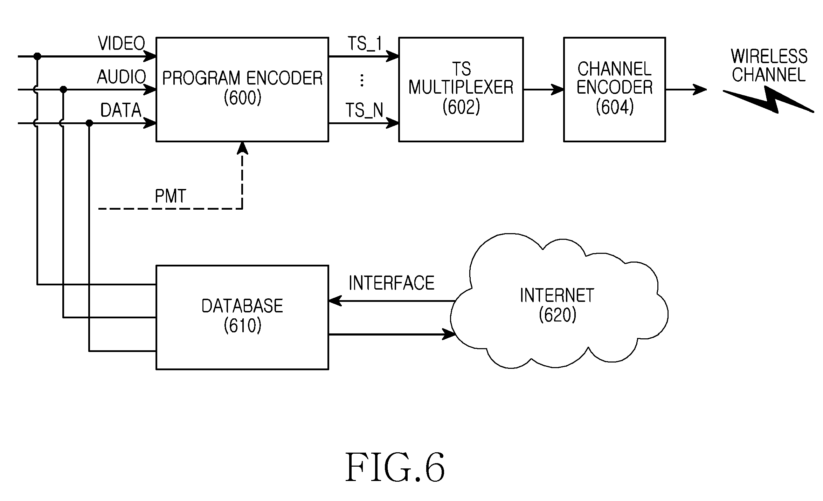

FIG. 6 is a diagram illustrating a broadcast transmitting apparatus for a combined broadcasting and communication service according to an embodiment of the present invention.

Referring to FIG. 6, the broadcast transmitting apparatus includes a program encoder 600, a TS multiplexer 602, a channel encoder 604, and a database 610.

The program encoder 600 compresses and packetizes video/audio/data by using the corresponding compression schemes, and outputs the results to the TS multiplexer 602.

The TS multiplexer 602 multiplexes the compressed audio/video/data streams, additional information of the streams multiplexed in a stream decoding process, and information for synchronous reproduction (e.g., PMT and the like), and outputs the resulting one stream to the channel encoder 604. The channel encoder 604 encodes the stream prior to transmission.

Meanwhile, in order to a high-resolution broadcast signal to a user, the database 610 stores multimedia data about a broadcast program with respect to each resolution, and provides the multimedia data of the broadcast program to the user through an Internet 620 on an as-needed basis.

Thus, media data descriptors such as DASH_MPD_descriptor(), alternate_media_component_data_descriptor(), and alternate_media_data_descriptor() are added into the PMT so that the user may access the URL of the database.

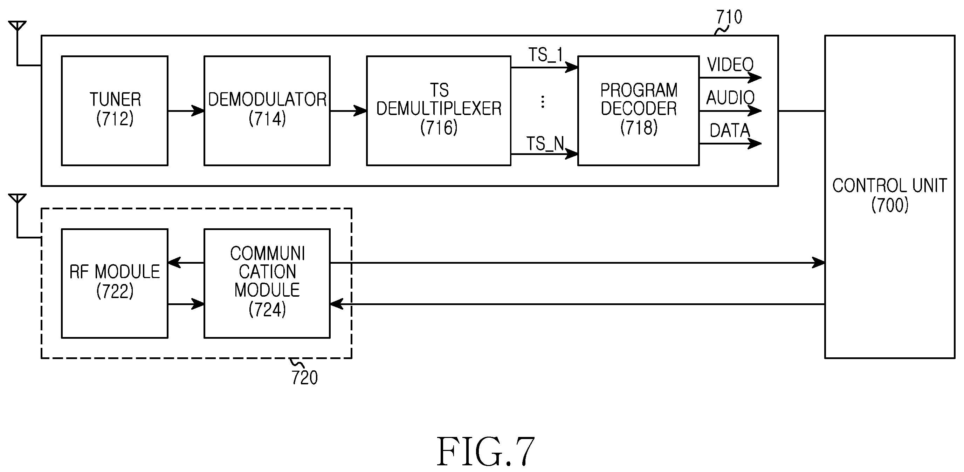

FIG. 7 is a block diagram illustrating a broadcast receiving apparatus for a combined broadcasting and communication service according to an embodiment of the present invention.

Referring to FIG. 7, the broadcast receiving apparatus may be an HDTV or a terminal such as a smart phone, and includes a control unit 700, a broadcast receiving module 710, and a tranceiver 720. The broadcast receiving module 710 includes a tuner 712, a demodulator 714, a TS demultiplexer 716, and a program decoder 718. The transceiver 720 includes an RF module 722 and a communication modem 724.

The broadcast receiving module 710 receives a broadcast signal, transmitted from a broadcasting apparatus, through an antenna. The broadcast signal complies with the MPEG-2 TS standard. According to the present invention, in order to obtain alternate video program data by a DASH protocol by using a wired/wireless Internet, media data descriptors such as DASH_MPD_descriptor(), alternate_media_component_data_descriptor(), and alternate_media_data_descriptor() are added into the PMT of the MPEG-2 TS.

The tuner 712 tunes a desired broadcast signal under the control of the control unit 700, and outputs the same to the demodulator 714. To this end, when a desired broadcast channel is selected through a user interface (e.g., a remote controller or a selection button), the control unit 700 reads information corresponding to the selected broadcast channel from a memory (not illustrated) and provides the channel information to the tuner 712.

The demodulator 714 demodulates the tuned broadcast signal into an elementary stream (ES) or a digital bit stream. The bit stream includes video, audio or data streams. The video, audio or data streams are output to the TS demultiplexer 716.

The TS demultiplexer 716 demultiplexes the descrambled broadcast signal into audio, video and data, and stores the same in a buffer (not illustrated).

The program decoder 718 reads the video, audio and data stored in the buffer, and decodes video, audio and data streams based on the MPEG-2 TS standard. For example, when the program decoder 718 reads a buffered bit stream from the buffer, decodes a compressed code, and stores recovered video/audio/data, the control unit 700 reads and displays the recovered video/audio/data.

Meanwhile, the transceiver 720 receives an RF signal, which is input by a base station (not illustrated) of a wireless network, from an antenna, and down-converts the input RF signal into an intermediate frequency (IF) signal or a baseband signal. Also, the IF signal or the baseband signal is filtered, decoded and digitalized, and the result is provided to the control unit 700. Also, the control unit 700 transmits the processed baseband signal to a speaker (e.g., audio data), or performs more processings (e.g., Web browsing).

Also, the transceiver 720 receives digital audio data from the control unit 700 or receives other output baseband data (e.g., Web data, e-mail, and interactive video game data), generates a processed baseband or IF signal, and encodes/multiplexes/digitizes the output baseband data. Also, the transceiver 720 up-converts the baseband or IF signal into an RF signal transmitted through an antenna.

The RF module 722 down-converts an RF signal received through an antenna and provides the resulting signal to the communication modem 724, or up-converts a baseband signal from the communication modem 724 and transmits the resulting signal through the antenna.

The communication modem 724 processes baseband signals communicated between the RF module 722 and the control unit 700. For example, in a transmitting (TX) mode, the communication modem 724 channel-encodes and spreads TX data. In a receiving (RX) mode, the communication modem 724 despreads and channel-decodes a received signal. In another embodiment, the communication modem 724 processes signals based on an OFDM/OFDMA scheme.

The control unit 700 controls an overall operation of the broadcast receiving apparatus, and controls operations of various processing modules in the broadcast receiving module 710 and the transceiver 720. Specifically, the control unit 700 performs a digital signal processing operation and controls operations of various processing modules in order to perform an operation according to the embodiment of the present invention described with reference to the drawings.

The embodiments described above may be combinations of elements and features of the present invention. The elements or features may be considered selective unless otherwise mentioned. Each element or feature may be practiced without being combined with other elements or features. Also, parts of the elements and/or features may be combined to construct an embodiment of the present invention. Operation orders described in the embodiments of the present invention may be rearranged. Some configurations or features of an embodiment may be included in another embodiment or may be replaced with corresponding configurations or features of another embodiment. It will be obvious that claims that are not explicitly cited in each other in the appended claims may be presented in combination as an embodiment or included as a new claim by a subsequent amendment after the application is filed.

The embodiments of the present invention may be implemented by various means, for example, hardware, firmware, software, or a combination thereof. In a hardware configuration, the embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, or microprocessors.

In a firmware or software configuration, the embodiments of the present invention may be implemented in the form of a module, a procedure, or a function performing functions or operations as described above. A software code may be stored in a memory unit and executed by a processor. The memory unit may be located inside or outside the processor and may communicate data with the processor through various known means.

As described above, in the case of a receiver having a wired/wireless Internet communication function in a broadcast system using the MPEG-2 TS standard, it is possible to provide a more improved picture quality by obtaining MPD (Media Presentation Description) defined in the DASH (Dynamic Adaptive Streaming over HTTP) standard through a broadcast channel or a communication channel on an as-needed basis.

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. A reception method for a combined broadcasting and communication service, comprising:
receiving first metadata including second metadata;
displaying the feasibility of reception of multimedia data replacing a broadcast program based on the first metadata including the second metadata; and
receiving the multimedia data replacing the broadcast program through an Internet Protocol (IP) network based on the second metadata when the multimedia data replacing the broadcast program is determined,
wherein the first metadata includes position information about the broadcast program, and the second metadata includes position information of the multimedia data replacing the broadcast program.

2. A reception apparatus for a combined broadcasting and communication service, comprising:
a broadcasting communication module for receiving first metadata including second metadata;
a control unit for displaying the feasibility of reception of multimedia data replacing a broadcast program based on the first metadata including the second metadata; and
a transceiver for receiving the multimedia data replacing the broadcast program through an Internet Protocol (IP) network based on the second metadata when the multimedia data replacing the broadcast program is determined,
wherein the first metadata includes position information about the broadcast program, and the second metadata includes position information of the multimedia data replacing the broadcast program.

3. The reception method or apparatus of claim 1 or 2, wherein the broadcast program is received through a broadcast channel as a broadcast stream and is received through the IP network as the multimedia data replacing the broadcast program, or the broadcast program is received through the IP network as only the multimedia data corresponding to the broadcast program.

4. The reception method or apparatus of claim 1 or 2, wherein the first metadata is an MPEG (Moving Picture Experts Group)-2 TS (Transport Stream) PMT(Program Map Table), and the second metadata is a DASH (Dynamic Adaptive Streaming over HTTP) MPD (Media Presentation Description).

5. The reception method or apparatus of claim 1 or 2, wherein the second metadata is added into a loop that is capable of describing a descriptor for an entire program inside the first metadata, or the second metadata is added into a loop that is capable of describing a descriptor for a media component inside the first metadata.

6. The reception method or apparatus of claim 1 or 2, wherein the second metadata comprises at least one of:
a PTS (Presentation Time Stamp) that represents a start time point corresponding to a first RAP (Random Access Point) based on a time base of the broadcast program;
a flag value that indicates whether to download the second metadata from a URL (Uniform Resource Locator);
information that indicates whether the URL is changed;
site information for downloading the second metadata; and
metadata about content replacing the broadcast program.

7. The reception method or apparatus of claim 1 or 2, wherein one of the first metadata and the second metadata further comprises information indicating that the reception of the multimedia data replacing the broadcast program based on the second metadata provides higher picture quality than the reception of the broadcast program based on the first metadata.

8. A transmission method for a combined broadcasting and communication service, comprising:
adding second metadata including position information of multimedia data replacing a broadcast program into first metadata; and
transmitting the first metadata including the second metadata through a broadcast channel,
wherein the first metadata includes position information about the broadcast program or other broadcast programs.

9. A transmission apparatus for a combined broadcasting and communication service, comprising:
a program encoder for adding second metadata including position information of multimedia data replacing a broadcast program into first metadata; and
a transmitter for transmitting the first metadata including the second metadata through a broadcast channel,
wherein the first metadata includes position information about the broadcast program or other broadcast programs.

10. The transmission method or apparatus of claim 8 or 9, wherein the broadcast program is transmitted through the broadcast channel as a broadcast stream and is transmitted through an IP (Internet Protocol) network as the multimedia data replacing the broadcast program, or the broadcast program is transmitted through the IP network as only the multimedia data corresponding to the broadcast program.

11. The transmission method or apparatus of claim 8 or 9, further comprising, when the multimedia data replacing the broadcast program is selected by a user, transmitting the multimedia data to the user through an IP (Internet Protocol) network.

12. The transmission method or apparatus of claim 8 or 9, wherein the first metadata is an MPEG (Moving Picture Experts Group)-2 TS (Transport Stream) PMT(Program Map Table), and the second metadata is a DASH (Dynamic Adaptive Streaming over HTTP) MPD (Media Presentation Description).

13. The transmission method or apparatus of claim 8 or 9, wherein the second metadata is added into a loop that is capable of describing a descriptor for an entire program inside the first metadata, or the second metadata is added into a loop that is capable of describing a descriptor for a media component inside the first metadata.

14. The transmission method or apparatus of claim 8 or 9, wherein the second metadata comprises at least one of:
a PTS (Presentation Time Stamp) that represents a start time point corresponding to a first RAP (Random Access Point) based on a time base of the broadcast program;
a flag value that indicates whether to download the second metadata from a URL (Uniform Resource Locator);
information that indicates whether the URL is changed;
site information for downloading the second metadata; and
metadata about content replacing the broadcast program.

15. The transmission method or apparatus of claim 8 or 9, wherein one of the first metadata and the second metadata further comprises information indicating that the reception of the multimedia data replacing the broadcast program based on the second metadata provides higher picture quality than the reception of the broadcast program based on the first metadata.
